# EUROPÄISCHE PATENTSCHRIFT

(11) **EP 0 915 578 B1**
(45) Veröffentlichungstag und Bekanntmachung des Hinweises auf die Patenterteilung: **08.12.2004**
(21) Anmeldenummer: 98115645.8
(22) Anmeldetag: 19.08.1998
(51) Int. Cl.: H04B 7/26

(54) **Digitale Telekommunikationseinrichtung mit Mobilteil und TDMA Verfahren**
Digital mobile telecommunication system and TDMA method.
Système de télécommunication mobile numérique et procédé TDMA

(30) Priorität: 08.09.1997 DE 19739225
(43) Veröffentlichungstag der Anmeldung: 12.05.1999
(73) Patentinhaber: Infineon Technologies AG, 81669 München (DE)
(72) Erfinder: Kranz, Christian. Dr., 40885 Ratingen Lintorf (DE); Heinen, Stefan, Dr., 47802 Krefeld (DE)
(74) Vertreter: Jannig, Peter, Dipl.-Ing.

(56) Entgegenhaltungen:
- EP-A- 0 210 698
- EP-A- 0 507 384
- FR-A- 2 036 328
- ELLIOTT P W ET AL: "SUPPORTING DIVERSE SERUICES IN A MICROCELLULAR TDMA SYSTEM" UK TELETRAFFIC SYMPOSIUM, XX, XX, 14. April 1993 (1993-04-14), Seiten 28-1-28-9, XP000562934
- "ETS 300 175-2;Radio Equipment and Systems (RES); Digital European Cordless Telecommunications (DECT) Common interface Part 2: Physical layer" EUROPEAN TELECOMMUNICATION STANDARD, XX, XX, Oktober 1992 (1992-10), Seiten 15-19, XP002135502

## Beschreibung

Die vorliegende Erfindung betrifft eine Vorrichtung gemäß dem Oberbegriff des Patentanspruchs 1, d.h. eine digitale Telekommunikationseinrichtung mit einem oder mehreren schnurlosen Mobilteilen, wobei die Mobilteile und/oder die Basisstation, mit welcher diese in Verbindung stehen oder treten können, dazu ausgelegt sind, nach dem TDMA-Verfahren zu kommunizieren.

Eine derartige Telekommunikationseinrichtung ist beispielsweise ein nach dem DECT-Standard arbeitendes Funksystem.

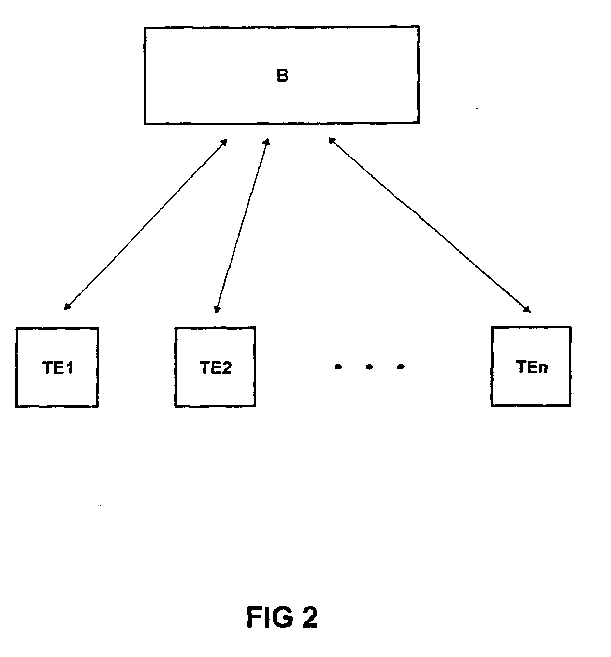

Der prinzipielle Aufbau eines solchen Funksystems ist in Figur 2 veranschaulicht.

Das in der Figur 2 gezeigte System besteht aus einer Basisstation B und mehreren schnurlosen Telekommunikationsendeinrichtungen TE1 bis TEn. Die schnurlosen Telekommunikationsendeinrichtungen TE1 bis TEn sind im betrachteten Beispiel Mobiltelefone, welche in der Lage sind, über Funk mit der Basisstation B zu kommunizieren.

Anstelle der schnurlosen Telekommunikationsendeinrichtungen TE1 bis TEn oder zusätzlich zu diesen können auch schnurlose Anschlußdosen zum Anschluß schnurgebundener Telekommunikationsendeinrichtungen zum Einsatz kommen. Die schnurlosen Telekommunikationsendeinrichtungen, die schnurlosen Anschluß dosen und vergleichbare Einrichtungen sind die eingangs bereits erwähnten Mobilteile.

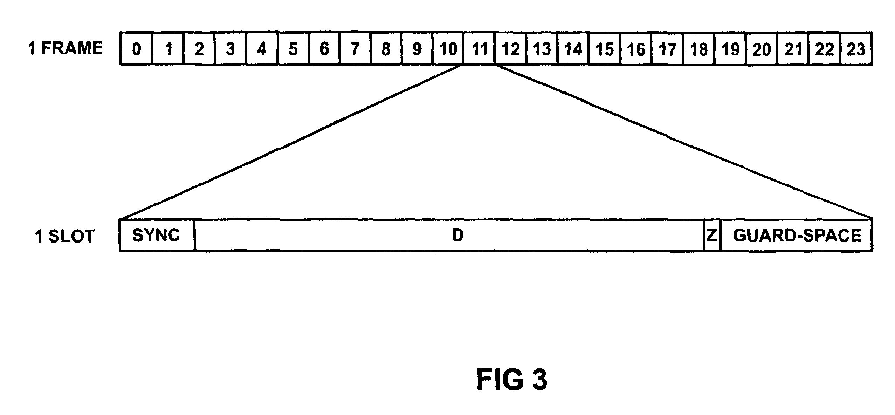

Die Datenübertragung zwischen der Basisstation B und den Mobilteilen erfolgt in Einheiten von sogenannten Frames, genauer gesagt TDMA-Frames, wobei TDMA für Time Division Multiple Access steht und besagt, daß die Frames so aufgebaut sind, daß die Basisstation in aufeinanderfolgenden Zeitschlitzen (sogenannten time slots bzw. slots) eines jeweiligen Frame der Reihe nach mit allen bei ihr eingebuchten Mobilteilen kommunizieren kann, und dies dann jeweils unter Ausnutzung der vollen Bandbreite des Übertragungskanals. Das TDMA-Verfahren ist hinlänglich bekannt und bedarf keiner weiteren Erläuterung. Der prinzipielle Aufbau eines zur Durchführung des TDMA-Verfahrens geeigneten (TDMA-)Frames wird nachfolgend anhand der Figur 3 erläutert.

Wie aus der Figur 3 ersichtlich ist, setzt sich ein solcher Frame, genauer gesagt der hier betrachtete DECT-Full-Slot-Frame aus 24 identisch langen Zeitschlitzen bzw. Slots (Full-Slots) zusammen. Die ersten 12 der 24 Slots werden von der Basisstation zu den Mobilteilen übertragen, und die sich daran anschließenden zweiten 12 Slots werden von den Mobilteilen zur Basisstation übertragen. Genauer gesagt werden der nullte Slot eines jedem Frame von der Basisstation zu einem nullten Mobilteil, der erste Slot von der Basisstation zu einem ersten Mobilteil, der zweite Slot von der Basisstation zu einem zweiten Mobilteil, ..., der elfte Slot von der Basisstation zu einem elften Mobilteil, und umgekehrt der zwölfte Slot vom nullten Mobilteil zur Basisstation, der dreizehnte Slot vom ersten Mobilteil zur Basisstation, der vierzehnte Slot vom zweiten Mobilteil zur Basisstation, ... und der dreiundzwanzigste Slot vom elften Mobilteil zur Basisstation übertragen.

Ein Frame bzw. die 24 Slots eines Frames werden innerhalb von 10 ms übertragen. Jeder Slot umfaßt 480 Bits wird in rund 417 µs (in 416,66 µs) übertragen. Wie in der Figur 3 angedeutet ist, verteilen sich die 480 Bis auf ein 32 Bits breites Sync-Feld, ein 388 Bits breites D-Feld, ein 4 Bits breites Z-Feld, und ein 56 Bits breites Guard-Space-Feld.

Für die Übertragung der eigentlich interessierenden Nutzdaten (beispielsweise Sprachdaten) sind 320 Bits innerhalb des D-Feldes reserviert. Die Basisstation kann also innerhalb von 10 ms 320 Bits umfassende Nutzdaten zu jedem der Mobilteile versenden und die gleiche Menge an Nutzdaten von jedem der Mobilteile empfangen; die Übertragungsrate für Nutzdaten zwischen der Basisstation und jedem der Mobilteile beträgt also 32 kBit/s in jede Richtung.

Der DECT-Standard ermöglicht damit die Realisierung von qualitativ hochwertigen und flexibel einsetzbaren Systemen.

Allerdings werden Systeme der beschriebenen Art nur in den seltensten Fällen so effizient betrieben wie vorstehend dargelegt wurde. In der Praxis arbeiten die Basisstation und die Mobilteile nämlich meistens nach dem sogenannten slow-hopping-Prinzip, wodurch sich die Anzahl der an einer Basisstation betreibbaren Funkteile auf die Hälfte reduziert. Der Grund hierfür ist, daß beim slow hopping nur jeder zweite Slot zur Datenübertragung verwendet werden kann; die restlichen Slots werden als sogenannte Blind Slots verwendet und sind für die Synchronisation oder Nachregelung des Sendeund/oder Empfangsfrequenz-Oszillators reserviert.

Der Einsatz des genannten slow-hopping-Prinzips erweist sich als vorteilhaft, weil die Basisstation und die Funkteile aufgrund der langen Synchronisierbarkeit bzw. Nachregelbarkeit des Sende- und/oder Empfangsfrequenz-Oszillators relativ einfach aufgebaut sein können. Er ist jedoch insofern ungünstig, als die Ausbaufähigkeit des Systems dadurch erheblich eingeschränkt wird.

EP-A-507384 offenbart ein TDMA System, dessen Rahmen einen Signalisierung -Zeitschlitz und mehreren Datenzeitschlitze, die unterschiedliche Länge aufweisen können, enthält.

FR-A-2 036 328 offenbart ein TDMA Satellitensystem, dessen Rahmen Signalisierung Zeitschlitze und entsprechende Datenzeitschlitze mit variabler Länge aufweist. Die Signalisierungs- und Daten-zeitschlitze wechseln sich nicht ab. Die Signalisierungszeitschlitze können auf mehren Rahmen verteilt werden.

Der vorliegenden Erfindung liegt daher die Aufgabe zugrunde, das Telekommunikationssystem gemäß dem Oberbegriff des Patentanspruchs 1 derart weiterzubilden, daß diese bei nach wie vor einfachem Aufbau und hoher Übertragungsqualität den Anschluß möglichst vieler Mobilteile gestattet.

Diese Aufgabe wird erfindungsgemäß durch die im kennzeichnenden Teil des Patentanspruchs 1 beanspruchten Merkmale gelöst.

Demnach ist vorgesehen, daß die Mobilteile und/oder die Basisstation dazu ausgelegt sind, innerhalb eines TDMA-Frame abwechselnd unterschiedlich lange Zeitschlitze aufeinanderfolgen zu lassen.

Verwendet man von den unterschiedlich langen Zeitschlitzen eines jeweiligen TDMA-Frame die kürzeren Zeitschlitze zur Synchronisation oder Nachregelung des Sende- und/oder Empfangsfrequenz-Oszillators der Basisstation und/oder der Mobilteile, und die längeren Zeitschlitze zur Datenübertragung, so läßt sich dadurch der Zeitanteil, der pro Zeiteinheit für die Synchronisation bzw. Nachregelung des Sende- und/oder Empfangsfrequenz-Oszillators zur Verfügung steht, reduzieren bzw. der Zeitanteil, der pro Zeiteinheit für die Datenübertragung zur Verfügung steht, entsprechend erhöhen.

Je mehr Zeit pro Frame für die Datenübertragung zur Verfügung steht, desto mehr Funkteile können (bei ansonsten unveränderten Bedingungen) an eine Basisstation angeschlossen werden.

Andererseits muß sich aber der verringerte Zeitanteil zur Synchronisation bzw. Nachregelung des Oszillators in keinster Weise negativ auswirken, denn die zur Synchronisation oder Nachregelung zur Verfügung stehenden Zeiten sowie die Abstände zwischen diesen Zeiten werden dadurch nicht automatisch zu kurz bzw. zu lang für eine ordnungsgemäße Synchronisation oder Nachregelung. Abgesehen davon kann die Reduzierung des zur Synchronisation bzw. Nachregelung verfügbaren Zeit insbesondere bei Systemen mit sehr vielen Zeitschlitzen oder Slots pro Frame in mehr oder weniger kleinen Stufen erfolgen, so daß hier problemlos eine alle Anforderungen befriedigende Einstellung gefunden werden kann.

Es wurde mithin eine Telekommunikationseinrichtung geschaffen, die bei nach wie vor einfachem Aufbau und hoher Übertragungsqualität den Anschluß maximal vieler Mobilteile gestattet.

Die Erfindung wird nachfolgend anhand eines Ausführungsbeispiels unter Bezugnahme auf die Zeichnung näher erläutert. Es zeigen
- Figur 1: das Format der Daten, die zwischen einer Basisstation und mit dieser kommunizierenden Telekommunikationsendeinrichtungen einer erfindungsgemäßen Telekommunikationseinrichtung ausgetauscht werden,
- Figur 2: den Aufbau eines nach dem DECT-Standard arbeitenden Funksystems, und
- Figur 3: das Format der Daten, die zwischen einer Basisstation und mit dieser kommunizierenden Telekommunikationsendeinrichtungen eines nach dem DECT-Standard arbeitenden herkömmlichen Funksystems ausgetauscht werden.

Die im folgenden näher beschriebene Telekommunikationseinrichtung ist wie ein nach dem DECT-Standard arbeitendes System eine digitale Telekommunikationseinrichtung mit einem oder mehreren schnurlosen Mobilteilen; sie ist allerdings zur Verwendung im sogenannten 2,4 GHz ISM-Band ausgelegt, welches sich von 2400 bis 2483,5 MHz erstreckt und von der FCC (Federal Communication Commision der U.S.A.) unter bestimmten Auflagen für den Betrieb derartiger Telekommunikationseinrichtungen freigegeben wurde.

Es sei bereits an dieser Stelle darauf hingewiesen, daß die erfindungsgemäße Telekommunikationseinrichtung nicht nur zur Verwendung im 2,4 GHz ISM-Band geeignet ist, sondern prinzipiell auch in beliebigen anderen Frequenzbändern zum Einsatz kommen kann.

Die Kommunikation zwischen den Mobilteilen und der Basisstation möge wie bei dem eingangs beschriebenen herkömmlichen System über eine Vielzahl von Zeitschlitzen bzw. Slots umfassende TDMA-Frames erfolgen.

Die Slots sind teils zur Datenübertragung ausgelegte Slots und teils zur Synchronisation oder Nachregelung des Sende- und/oder Empfangsfrequenz-Oszillators der Basisstation und/oder der Mobilteile ausgelegte Slots, wobei die beiden Slot-Typen einzeln abwechselnd aufeinander folgen. Die zur Synchronisation oder Nachregelung des Sende- und/oder Empfangsfrequenz-Oszillators der Basisstation und/oder der Mobilteile ausgelegten Slots werden nachfolgend der Einfachheit halber als Guard-Slots bezeichnet.

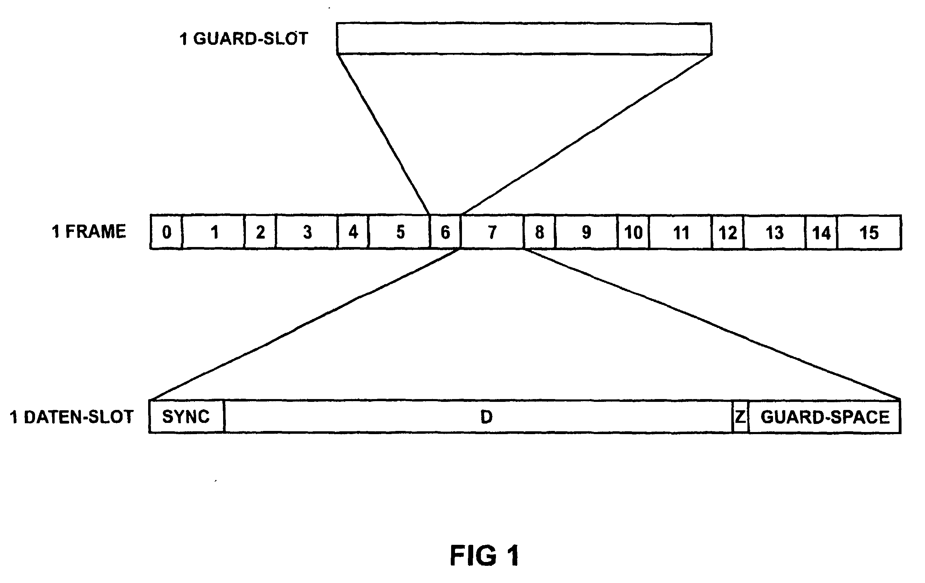

Der Aufbau eines wie beschrieben zusammengesetzten Frames ist in Figur 1 veranschaulicht.

Wie aus der Figur 1 ersichtlich ist, umfaßt der dort gezeigte Frame 16 Slots, welche der Anschaulichkeit halber von 0 bis 15 durchnumeriert sind. Die geradzahlige Nummern aufweisenden (kürzeren) Slots sind dabei die Guard-Slots, und die ungeradzahlige Nummern aufweisenden (längeren) Slots sind die zur Datenübertragung ausgelegten (Daten-)Slots. In der ersten Hälfte des Frame (Slots 0 bis 7) werden Daten von der Basisstation zu den Mobilteilen übertragen, und in der zweiten Hälfte des Frame (Slots 8 bis 15) werden Daten von den Mobilteilen zur Basisstation übertragen. Genauer gesagt wird der erste Slot eines jeden Frame von der Basisstation zu einem nullten Mobilteil, der dritte Slot von der Basisstation zu einem ersten Mobilteil, der fünfte Slot von der Basisstation zu einem zweiten Mobilteil, der siebte Slot von der Basisstation zu einem dritten Mobilteil, und umgekehrt der neunte Slot vom nullten Mobilteil zur Basisstation, der elfte Slot vom ersten Mobilteil zur Basisstation, der dreizehnte Slot vom zweiten Mobilteil zur Basisstation, und der fünfzehnte Slot vom dritten Mobilteil zur Basisstation übertragen.

Der Frame gemäß Figur 1 weist im betrachteten Beispiel eine Gesamtdauer von 10 ms auf. Davon belegt
- jeder der Guard-Slots, d.h. jeder der Slots 0, 2, 4, 6, 8, 10, 12 und 14 rund 416 µs (416,66 µs), und
- jeder der zur Datenübertragung ausgelegten Slots, d.h. jeder der Slots 1, 3, 5, 7, 9, 11, 13 und 15 rund 833 µs (833,33 µs).

Innerhalb der 833 µs eines zur Datenübertragung ausgelegten Slots werden 480 Bits übertragen. Wie in der Figur 1 angedeutet ist, verteilen sich diese 480 Bits auf ein 32 Bits breites Sync-Feld, ein 388 Bits breites D-Feld, ein 4 Bits breites Z-Feld, und ein 56 Bits breites Guard-Space-Feld.

Der Aufbau der zur Datenübertragung ausgelegten Slots stimmt vollständig mit dem Aufbau der Slots des eingangs unter Bezugnahme auf die Figur 3 beschriebenen DECT-Frames überein; nur die Zeit, innerhalb welcher ein solcher Slot übertragen wird, ist unterschiedlich. Dadurch können die zur Datenübertragung ausgelegten Slots gemäß Figur 1 im wesentlichen genauso gehandhabt werden wie die Slots eines DECT-Frame; insbesondere kann zumindest der im DECT-System verwendete Basisband-Chip unverändert oder allenfalls geringfügig modifiziert zum Einsatz kommen.

Die langsamere Übertragung der zu übertragenden Daten wird vorzugsweise dadurch veranlaßt, daß ein die Übertragungsgeschwindigkeit bestimmender, zeitlich konstanter Bit-Takt entsprechend modifiziert wird, wobei die Modifikation im betrachteten Beispiel in einer Halbierung der Bit-Takt-Frequenz besteht. Diese Halbierung wird vorzugsweise durch Einfügen eines entsprechenden Teilers in den Bit-Takt-Generator bewerkstelligt. Die langsamere Übertragung der zu übertragenden Daten (geringere Bitfolgefrequenz) wird vorliegend vorgesehen, um die im 2,4 GHz ISM-Band zulässige Übertragungskanal-Bandbreite nicht zu überschreiten.

Für die Übertragung der eigentlich interessierenden Nutzdaten (beispielsweise Sprachdaten) sind 320 Bits innerhalb des D-Feldes reserviert. Die Basisstation kann also innerhalb von 10 ms 320 Bits umfassende Nutzdaten zu jedem der Mobilteile versenden und die gleiche Menge an Nutzdaten von jedem der Mobilteile empfangen; die Übertragungsrate für Nutzdaten zwischen der Basisstation und jedem der Mobilteile beträgt also wie auch bei nach dem DECT-Standard arbeitenden Telekommunikationseinrichtungen 32 kBit/s in jede Richtung.

Die Guard-Slots sind nur halb so lang wie die zur Datenübertragung ausgelegten Slots; ihre Länge entspricht 240 Bits. Sie sind aber zeitlich gesehen genauso lang wie die beim herkömmlichen Frame gemäß Figur 3 zur Synchronisation oder Nachregelung des Sende- und/oder Empfangsfrequenzoszillators der Basisstation und/oder der Mobilteile vorgesehenen Slots (Blind Slots); unterschiedlich sind nur die zeitlichen Abstände, nach den jeweils eine erneute Synchronisation oder Nachregelung des Oszillators erfolgen kann.

Da "nur" die zeitlichen Abstände zwischen aufeinanderfolgenden Synchronisationen oder Nachregelungen verlängert sind, aber selbst die verlängerten Abstände äußerst kurz sind (zwischen dem Ende einer Synchronisation oder Nachregelung und dem Beginn der nächsten Synchronisation oder Nachregelung vergehen lediglich die 833 µs eines zur Datenübertragung ausgelegten Slots), kann die beschriebene Telekommunikationseinrichtung ohne oder zumindest ohne nennenswerte qualitative Einbußen betrieben werden

Dies gilt auch für den Fall, daß die Guard-Slots kürzer sind als die Blind Slots; selbst bei einer deutlichen Verkürzung wäre nämlich die zur Synchronisation oder Nachregelung zur Verfügung stehende Zeit immer noch um ein Vielfaches länger als wenn keine speziellen Slots hierfür reserviert wären (dann stünde hierfür nur das vorstehend bereits erwähnte Guard-Space-Feld der zur Datenübertragung ausgelegten Slots zur Verfügung).

Andererseits ermöglicht es die relativ zu den für die Datenübertragung ausgelegten Slots erfolgte Verkürzung der Guard-Slots aber, daß die Zeit, die für die zur Datenübertragung ausgelegten Slots pro Zeiteinheit (pro Frame) zur Verfügung steht, relativ und absolut größer gemacht werden kann. Dadurch kann pro Zeiteinheit (pro Frame) eine größere Menge an Nutzdaten übertragen werden, was seinerseits wiederum dazu ausgenutzt werden kann, die zu übertragende Information (z.B. Sprache) mit besserer Qualität zu übertragen und/oder eine erhöhte Anzahl von Verbindungen aufzubauen (mehr Mobilteile an die Basisstation anzuschließen).

Behält man die Qualität der zu übertragenden Information unverändert bei, so läßt sich beim betrachteten Beispiel ein Mobilteil mehr an die Basisstation anschließen; würden zur Synchronisation und Nachregelung des Oszillators die herkömmlichen Blind Slots, d.h. Slots, die genauso lang sind wie die zur Datenübertragung ausgelegten Slots anstelle der verkürzten Guard Slots verwendet werden, könnten nur drei anstatt vier Mobilteile an die Basisstation angeschlossen werden.

Daß die Anzahl der Mobilteile, die an eine Basisstation angeschlossen werden können, trotzdem niedriger ist als bei nach dem DECT-Standard arbeitenden Systemen gemäß den Figuren 2 und 3, liegt an der nur halb so schnellen Übertragung der zu übertragenden Information im betrachteten Beispiel. Dies ist, wie vorstehend bereits erwähnt wurde, wegen der Auslegung der beschriebenen Telekommunikationseinrichtung für das 2,4 GHz ISM-Band erforderlich.

Die langsamere Übertragung (Übertragungsrate) hat, wie vorstehend bereits erwähnt wurde, zur Folge, daß die zur Datenübertragung ausgelegten Slots doppelt so lang sind wie die entsprechenden Slots des DECT-Frame gemäß Figur 3.

Weil dies und die veränderte Bittakt-Frequenz die einzigen Unterschiede zu der eingangs beschriebenen herkömmlichen Telekommunikationseinrichtung sind, kann, wie vorstehend bereits angedeutet wurde, der Digitalteil der eingangs beschriebenen herkömmlichen Telekommunikationseinrichtung mit geringen Modifikationen auch für die beschriebene Telekommunikationseinrichtung verwendet werden.

Dies ist in Anbetracht der Tatsache, daß die beschriebene Telekommunikationseinrichtung an veränderte technische Anforderungen anzupassen ist (geringere Übertragungsbandbreite) und darüber hinaus hinsichtlich deren Effizienz erheblich verbessert wurde (Anschließbarkeit zusätzlicher Mobilteile) ein erstaunlich einfacher Weg zur praktischen Realisierung der beschriebenen Telekommunikationseinrichtung.

Der HF(Hochfrequenz)-Teil der beschriebenen Telekommunikationseinrichtung, durch welchen eine oder mehrere durch den Übertragungskanal bestimmte Trägerfrequenzen entsprechend den zu übertragenden Daten moduliert werden bzw. die übertragenen Daten durch Demodulation wiedergewonnen werden, unterscheidet sich aufgrund der unterschiedlichen Trägerfrequenzen naturgemäß von den HF-Teilen herkömmlicher Telekommunikationseinrichtungen. Der HF-Teil der beschriebenen Telekommunikationseinrichtung muß daher modifiziert, d.h. auf die geänderten Trägerfrequenzen angepaßt werden.

Zusammenfassend kann abschließend festgestellt werden, daß die beschriebene Telekommunikationseinrichtung bei nach wie vor einfachem Aufbau und hoher Übertragungsqualität den Anschluß maximal vieler Mobilteile gestattet.

### Bezugszeichenliste

- B: Basisstation
- TE1 - TEn: Telekommunikationsendeinrichtungen
- SYNC: SYNC-Feld eines zur Datenübertragung ausgelegten Slots
- D: D-Feld eines zur Datenübertragung ausgelegten Slots
- Z: Z-Feld eines zur Datenübertragung ausgelegten Slots
- GUARD SPACE: GUARD-SPACE-Feld eines zur Datenübertragung ausgelegten Slots

## Patentansprüche

1. Digitale Telekommunikationseinrichtung mit einem oder mehreren schnurlosen Mobilteilen, wobei die Mobilteile (TE₁, TE₂,..,TEₙ) und/oder die Basisstation (B), mit welcher diese in Verbindung stehen oder treten können, dazu ausgelegt sind, nach dem TDMA-Verfahren zu kommunizieren,
**dadurch gekennzeichnet,**
- **daß** die Mobilteile und/oder die Basisstation dazu ausgelegt sind, innerhalb eines TDMA-Frame abwechselnd erste Zeitschlitze (0, 2, 4, 6, 8, 10, 12, 14 - Abbildung 1) und zweite Zeitschlitze (1, 3, 5, 7, 9, 11, 13, 15 - Abbildung 1) aufeinanderfolgen zu lassen,
- wobei die ersten Zeitschlitze kürzer sind als die zweiten Zeitschlitze,
- wobei die ersten Zeitschlitze Zeitschlitze zur Synchronisation oder Nachregelung eines Sende- und/oder Empfangsfrequenz-Oszillators der Basisstation und/oder der Mobilteile sind,
- wobei die zweiten Zeitschlitze Zeitschlitze zur Datenübertragung sind, und
- wobei jedem zweiten Zeitschlitz ein erster Zeitschlitz vorangeht.

2. Telekommunikationseinrichtung nach Anspruch 1,
**dadurch gekennzeichnet,**
**daß** die Dauer der Zeitschlitze zur Synchronisation oder Nachregelung des Sende- und/oder Empfangsfrequenz-Oszillators gleich der Dauer eines Blind Slot in einer nach dem DECT-Standard arbeitenden Telekommunikationseinrichtung ist.

3. Telekommunikationseinrichtung nach einem der vorhergehenden Ansprüche,
**dadurch gekennzeichnet,**
**daß** diese für den Einsatz im 2,4 GHz ISM-Band ausgelegt ist.

## Claims

1. A digital telecommunications device having one or more cordless mobile parts, the mobile parts (TE₁, TE₂, .., TEₙ) and/or the base station (B) to which these mobile parts are or can be connected being designed to communicate according to the TDMA method,
**characterized in that**
- the mobile parts and/or the base station are designed to allow first time slots (0, 2, 4, 6, 8, 10, 12, 14 - Figure 1) and second time slots (1, 3, 5, 7, 9, 11, 13, 15 - Figure 1) alternately to succeed one another within a TDMA frame,
- the first time slots being shorter than the second time slots,
- the first time slots being time slots for the synchronization or readjustment of a transmitting and/or receiving frequency oscillator of the base station and/or of the mobile parts,
- the second time slots being time slots for data transmission, and
- each second time slot being preceded by a first time slot.

2. Telecommunications device according to Claim 1,
**characterized in that**
the duration of the time slots for the synchronization or readjustment of the transmitting and/or receiving frequency oscillator is equal to the duration of a blind slot in a telecommunications device operating according to the DECT standard.

3. Telecommunications device according to one of the preceding claims,
**characterized in that**
it is designed for use in the 2.4 GHz ISM band.

## Revendications

1. Équipement de télécommunication numérique comprenant une ou plusieurs parties mobiles sans fil, les parties mobiles (TE1, TE2, ..., TEn) et/ou la station de base (B) avec laquelle celles-ci sont ou peuvent entrer en communication étant conçues pour communiquer selon le procédé TDMA, **caractérisé en ce**
- **que** les parties mobiles et/ou la station de base sont conçues pour se faire succéder au sein d'une trame TDMA alternativement des premiers intervalles de temps (0, 2, 4, 6, 8, 10, 12, 14 - Figure 1) et des deuxièmes intervalles de temps (1, 3, 5, 7, 9, 11, 13, 15 - Figure 1),
- les premiers intervalles de temps étant plus courts que les deuxièmes intervalles de temps,
- les premiers intervalles de temps étant des intervalles de temps pour la synchronisation ou le réajustage d'un oscillateur de la fréquence d'émission et/ou de réception de la station de base et/ou des parties mobiles,
- les deuxièmes intervalles de temps étant des intervalles de temps pour la transmission des données et
- un premier intervalle de temps précédent chaque deuxième intervalle de temps.

2. Équipement de télécommunication selon la revendication 1, **caractérisé en ce que** la durée des intervalles de temps destinés à la synchronisation ou au réajustage de l'oscillateur de la fréquence d'émission et/ou de réception est égale à la durée d'un créneau aveugle dans un équipement de télécommunication fonctionnant selon la norme DECT.

3. Équipement de télécommunication selon l'une des revendications précédentes, **caractérisé en ce qu'**il est conçu pour être utilisé dans la bande ISM des 2,4 GHz.
